Europäisches Patentamt

European Patent Office

Office européen des brevets

(11) Publication number: **0 336 556**
A2

## (12) EUROPEAN PATENT APPLICATION

(21) Application number: **89302021.4**

(22) Date of filing: **01.03.89**

(51) Int. Cl.⁴: **D01F 6/62 , C08J 5/18**

(30) Priority: **06.04.88 GB 8808035**

(43) Date of publication of application:
**11.10.89 Bulletin 89/41**

(84) Designated Contracting States:
**DE ES FR GB IT NL**

(71) Applicant: **IMPERIAL CHEMICAL INDUSTRIES PLC**
**Imperial Chemical House Millbank**
**London SW1P 3JF(GB)**

(72) Inventor: **Rogers, Victor**
**320 Bradford Road**
**Pudsey Leeds LS28 7TQ(GB)**

(74) Representative: **Hulse, Raymond et al**
**Imperial Chemical Industries PLC Legal**
**Department: Patents PO Box 6 Bessemer**
**Road**
**Welwyn Garden City Herts, AL7 1HD(GB)**

(54) Filaments or films of polyethylene terephthalate.

(57) A process for producing a filament or film of polyethylene terephthalate comprising forming a solution of polyethylene terephthalate in either phenyl ether or a mixture of phenyl ether and biphenyl, and more particularly a mixture of between 0 and 40% by weight of biphenyl and between 100 and 60% by weight of phenyl ether, extruding the solution through a spinneret or slot die, through air and into a cooling bath to form a gel filament or film, optionally removing residual solvent from the filament or film and drawing the filament or film to improve the modulus thereof.

Fig.1(a).

# FILAMENTS OR FILMS OF POLYETHYLENE TEREPHTHALATE

This invention relates to filaments or films of polyethylene terephthalate and to a process of making such filaments or films by dry jet wet spinning of a solution of polyethylene terephthalate.

Dry jet wet spinning of a polymer solution has the characteristic that the polymer solution is extruded sequentially through air and then into a liquid bath. In contrast, in a normal wet spinning process, the jet or die is immersed in a liquid bath.

It is already known to extrude a hot solution of a fibre-forming polymer through a dry jet into a cooling bath where it forms a gel filament; this wet filament then being passed through an oven where it is heated and stretched to form high-strength, high-stiffness fibres (P Smith and P J Lemstra) J Mater. Sci 15 (1980) 505. Details of the process using a solution of polyethylene in decalin are described in British Patent 2042414.

Also European Patent No 24810 describes a method for producing shaped articles such as filaments or films from a gel of a crystallisable high molecular weight polymer for example a polyolefine, such gels being formed from a solution of the polymer in a solvent such as decalin.

Japanese Patent 61-207616 (Teijin KK) describes a wet-spinning process in which polyethylene terephthalate having an intrinsic viscosity greater than 1.5 is dissolved in dichloroacetic acid or some other specified solvent such as nitrobenzene to provide a 3-10% (w/w) spinning solution. This is cooled, refrigerated and then reheated and spun from a 600 μm spinneret which is immersed in iso-butanol or an alternative non-solvent which serves to extract the dichloroacetic acid. The fibre is wound up at 10 m/min. After being allowed to stand for two days at room temperature, the fibre is drawn in two stages (1) at 70-90°C at 300% per minute, (2) at 210-240°C at 5% per minute, over a 1 metre long hot plate.

Fibres spun from a 6% (w/w) solution of polyethylene terephthalate having an intrinsic viscosity of 1.6 and drawn 20X had a tenacity of 26 g/dtex and elongation at break of 5.1%; fibres spun from a 4% (w/w) solution of polyethylene terephthalate having an intrinsic viscosity of 5.0 and drawn 22.5X had a tenacity of 31.6 g/dtex and elongation at break of 5.2%.

Japanese Patent 62-30024 (Toyo Boseki KK) describes a gel extrusion process in which polyethylene terephthalate having an intrinsic viscosity greater than 1.2 is dissolved in nitrobenzene at around 200°C and then cooled to form material in a gelled state or extruded into a fibre in a gelled state. The polyethylene terephthalate content was 20% (w/w) for an intrinsic viscosity of 1.2 and 10% (w/w) for an intrinsic viscosity of 2.5.

All the examples provided refer to the production of a gel film; this was squeezed through rollers at room temperature to facilitate solvent removal, and then stretched in three stages (1) at 160-180°C, (2) at 190-215°C, and (3) at 235-245°C, the greatest stretch being at stage (3). After stretching, the material was heat treated for 5 minutes at 190°C whilst under tension.

The drawn films, from 10% (w/w) polyethylene terephthalate having an intrinsic viscosity of 2.46, after stretching 14X gave a tenacity of 10.4 g/d and modulus 200 g/d. Films from 20% (w/w) polyethylene terephthalate having an intrinsic viscosity of 1.2 after stretching 10.5X gave a tenacity of 8.1 g/d and modulus of 136 g/d.

European Patent Application 251313 (Toyo Boseki KK) describes fibres made from high intrinsic viscosity polyethylene terephthalate by two methods involving solvents. In one method the melt spun fibres are swollen in an organic solvent having a defined solubility parameter, the solvent is extracted and then the fibre is drawn, while in the other a standard wet spinning method was used in which the solvent was a mixture of trifluoroacetic acid and methylene chloride.

A report in Progress in Polymer Physics in Japan XXX (1987) 333 by M Ito et al describes a solution spinning process in which polyethylene terephthalate with an intrinsic viscosity of 1.78 is dissolved in nitrobenzene at 210°C to give a 20% (w/w) solution. On cooling the polymer solution to room temperature a 'pseudo-gel' was formed. This was reheated to form the polymer solution and extruded at 175-230°C through a conical die of 0.2 mm hole diameter and the extruded filaments were collected at 4-300 cms/min. Optionally, spinning was carried out using a polymer concentration of between 20 and 65% (w/w). It is not clear from the paper whether a gel-fibre (containing solvent) or a wet-spun fibre (spun into a non-solvent bath) is produced.

Drawing was carried out in two stages (1) at room temperature by hand to a draw ratio of 4 to 5 (2) at 230°C by a tensile tester.

A maximum tensile modulus of 29.5 GPa (approx 215 g/dtex) and strength of 1.4 GPa (approx 10.2 g/dtex) were achieved with the drawn fibres.

We have now found that filaments or films or polyethylene terephthalate can be produced by a dry jet wet spinning or a dry die extrusion process using a solution of polyethylene terephthalate in either phenyl ether or a mixture of phenyl ether and biphenyl.

The solvents used hitherto are highly toxic and would be highly dangerous in an industrial process. The solvents now proposed have a very low order of toxicity and no serious chronic effects on humans have been recorded.

According to the present invention, therefore, we provide a process for producing a filament or film of polyethylene terephthalate comprising forming a solution of polyethylene terephthalate, extruding the solution through a spinneret or a slot die, through air and into a cooling bath to form a gel filament or film, optionally removing residual solvent from the filament or film and drawing the filament or film to improve the modulus thereof characterised in that the solution of polyethylene terephthalate is formed in phenyl ether or a mixture of phenyl ether and biphenyl.

The process of the invention is particularly suitable for use with polyethylene terephthalate having an intrinsic viscosity of greater than 0.9 measured either in dichloroacetic acid at 25°C or by a melt viscosity measurement.

An important aspect of the invention is the dissolving of the polyethylene terephthalate in phenyl ether or a mixture of phenyl ether and biphenyl as solvent. Though phenyl ether may be used as the solvent we prefer to use a composition between 0 and 40% by weight of biphenyl and between 100 to 60% by weight of phenyl ether.

The two solvents in the composition form a eutectic with a crystallisation point of 12°C at a concentration of 26.5% by weight of biphenyl. The crystallisation point increases as the limits defined hereinbefore are approached and consequently the solvent in the spun filament would be solid at room temperature and therefore the fibre would be brittle. It is therefore preferable to operate the process using a solvent near the eutectic composition so that the spun fibre is not brittle at room temperature.

We have found it desirable to ensure that the polyethylene terephthalate is dry before it is added to the dry solvent. This can be achieved by heating the polymer under vacuum at, say, 120°C for, say, 18 hours. After addition to the solvent, the mixture is heated at between 230 and 240°C under an atmosphere of nitrogen until a clear solution forms. Heating is then continued for a further 30 minutes, with stirring, to form the spinning solution.

For simplicity the various stages of the process will now be described with reference to the production of filaments but it will be appreciated that the process of the invention is also suitable for producing films of polyethylene terephthalate.

The viscosity of the spinning solution is determined by the concentration and molecular weight of the polymer. For example, a suitable spinning viscosity is produced at a polymer concentration of 25% by weight of polyethylene terephthalate having an intrinsic viscosity of 1.25 dl/g or a 30% solution of polyethylene terephthalate with an intrinsic viscosity of 0.9 dl/g (intrinsic viscosity being measured in dichloroacetic acid at 25°C). Below these concentrations, the spinning solution viscosity is inadequate to produce a continuous threadline and breakdown occurs.

The spinning solution may be either cooled to room temperature to produce a solid gel or it may be transferred directly to the heated reservoir of the spinning unit. In the first case the solid gel is remelted to reform the spinning solution and in the second case the spinning solution is allowed to cool or is heated to the required spinning temperature between 185 and 250°C; the exact temperature being determined by the polymer concentration, polymer molecular weight and solution viscosity. Above 250°C there is a tendency for the solvent to boil whereas below 185°C there is the likelihood of the spinning solution reverting to a solid gel which would terminate the spinning process. Consequently, during spinning, all parts of the equipment in contact with the spinning solution must be kept above 185°C to avoid spinning breakdowns; the gel melting temperature, depending on polymer concentration and molecular weight, being in the region of 215°C.

Extrusion is carried out through a single hole spinneret having a hole diameter of 0.5 to 0.7 mm into an air gap and then into a cooling bath.

The extrudate enters a cooling bath, conveniently containing water, maintained at room temperature (or at 35°C when the solvent used is phenyl ether which crystallises at 27°C) and the gel filament so formed is transported via low friction rollers to a winding unit. The hot liquid extrudate has a specific gravity of about 0.9 at the temperature of spinning with the result that if water is used in the coolant bath, the gel filament has a tendency to float on the surface of the water (and thereby affecting the quality of the product) unless this is overcome by increasing the spinning stretch (ratio of winding speed to linear extrusion rate). Alternatively to avoid this difficulty a coolant having a specific gravity of about 0.8 may be used.

The gel filament is very elastic and to avoid variations in filament diameter care has to be taken to avoid oscillation or any other variation in the stretching of the filament between the rollers and the winding unit.

Optionally the residual solvent is removed from the filament before it is drawn. This may be achieved by solvent extraction using, for example, acetone or methanol or by heating the filament.

The spun filaments are drawn at temperatures up to, for example, 240°C.

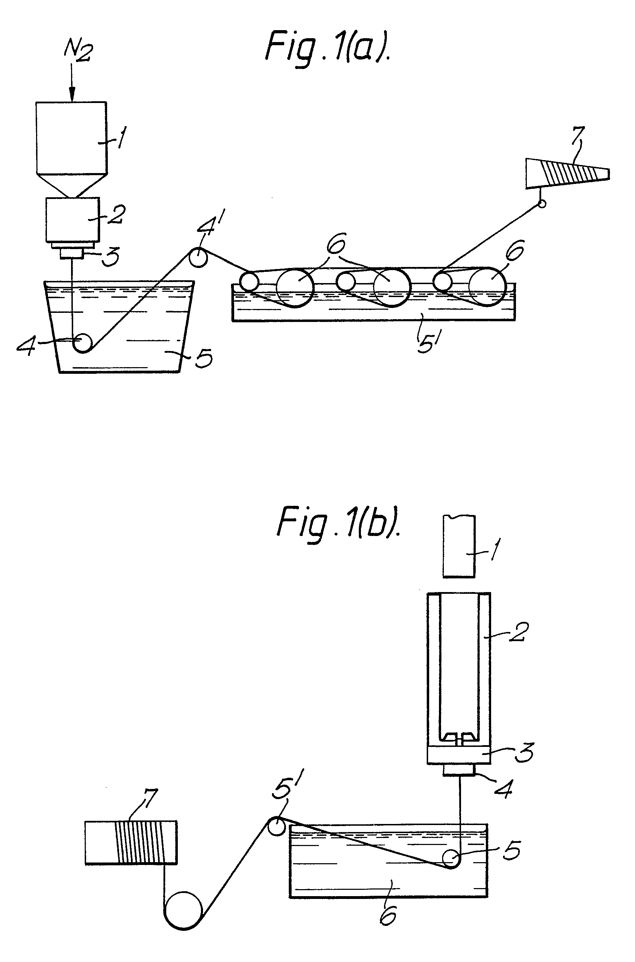

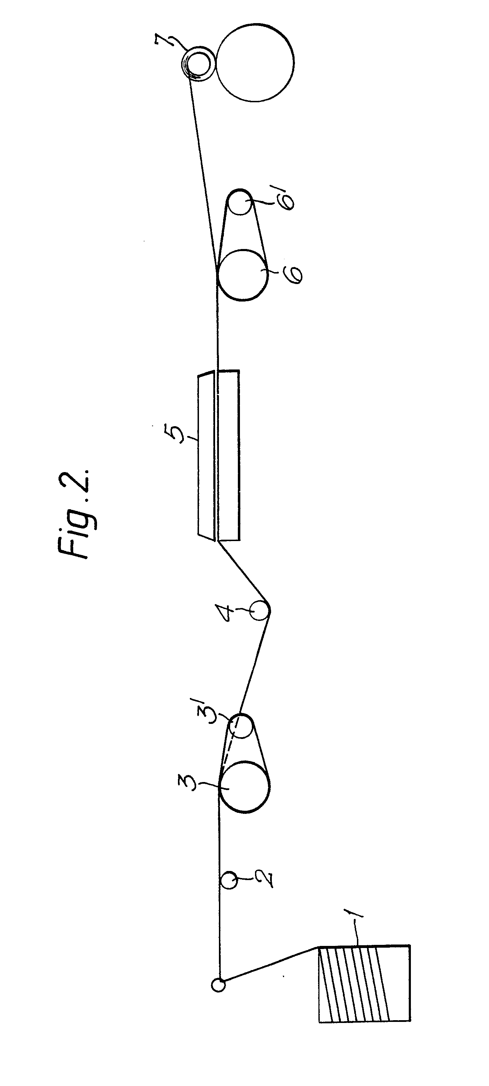

The process of the invention will now be described with reference to the accompanying drawings in which Figs 1(a) and 1(b) are schematic representations of typical spinning units which may be used and Fig 2 shows an apparatus for the hot drawing of a spun filament.

In the unit shown in Fig 1(a) the spinning solution is stored in reservoir 1 under an atmosphere of nitrogen, extruded by means of a metering pump 2, through a filter 2 and spinneret 3 into an air gap and into a bath containing coolant. The gel filament so formed passes around low friction rollers 4,4' and then around drum winders 6 which are partially immersed in another coolant bath. Finally at 7 the filament is wound on to a cone.

In the unit shown in Fig 1(b) the spinning solution within a melter barrel 2 is forced by means of a ram plunger 1 first through a filter pack 3 and then through a spinneret 4. Again the spinning threadline passes through air and into a coolant bath 6 where a gel filament is formed. The gel filament passes around low friction rollers 5,5' and passes to a winding unit 7.

In Fig 2 is shown an apparatus for the hot drawing of a continuous filament produced according to the invention. The filament as it is progressively unwound from a bobbin 1 passes over a tensioner roll 2 around feed rolls 3,3', over hot pin 4, over the surface of a hot plate 5, around draw rolls 6,6' and to a winder 7.

The solvents used in the spinning process of the invention described above, namely phenyl ether and phenyl ether/diphenyl allow the formation of polyethylene terephthalate gels with polymer concentrations as low as 0.5% (w/w). When solvents other than these are used to form such low concentration gels either polymer precipitation occurs or the polymer remains in solution.

In the preparation of high strength and high modulus polyethylene fibres a key feature has been the requirement for a low concentration polymer gel because such a gel reduces the frequency of inter molecular entanglements and facilitates molecular attenuation to a high draw ratio thereby producing a high modulus. The use of these solvents therefore offers considerable scope for producing high strength and high modulus polyethylene terephthalate fibres.

Low concentration polyethylene terephthalate gels may be prepared by dissolving the polymer at 230°C followed by heating the solution to 240 - 250°C; the solution is then transferred to a container held at 200°C and then held at this temperature for several hours. The solution is then allowed to cool slowly to room temperature over a period of 2 to 3 hours. The gel so formed will remelt (or redissolve) above 210°C but will reform as a gel on cooling (whether fast cooled or not) provided that the remelted gel is not heated to temperatures in excess of 240°C. In excess of this temperature subsequent cooling of, for example, a 0.5% gel will result in polymer precipitation. In contrast we have found that the solvents used in the prior art specifically dichloroacetic acid and nitrobenzene did not form gels at comparable concentrations.

We have referred above to the advantages of using as a solvent a eutectic composition of phenyl ether and biphenyl whereby the fibre produced is not brittle at room temperature. It should also be realised that this advantage would also apply in those processes utilising a solvent to cause the swelling of melt spun fibres of polyethylene terephthalate for example as disclosed in European Patent Application 251313.

The invention will now be described with reference to the following Examples:

EXAMPLE 1

310 grams of polyethylene terephthalate of intrinsic viscosity of 1.71 (measured by melt viscosity) were dissolved in 926 grams of phenyl ether/biphenyl (73.5/26.5) at 240°C. The spinning solution was transferred at 230°C into the heated reservoir of the spinning unit and allowed to cool to 205°C. The spinning solution was extruded at 13.5 m/min from a single hole - 700 μm hole diameter - spinneret into a 5 litre tank of cold water via a jet gap of 4 cms and wound up successively on a 40 m/min drum partly immersed in cold water and then cone-wound on a Leesona cone - winding machine at about 60 m/min. The drum wound filaments were 300 μm diameter and the cone-wound filaments were about 200 μm in diameter.

EXAMPLE 2

45 grams of polyethylene terephthalate of intrinsic viscosity 1.71 were dissolved in 105 grams of phenyl ether/biphenyl (73.5/26.5) at 240°C to give a 30% polymer solution. The solution was transferred to a heated reservoir maintained at 193°C and allowed to cool to this temperature. The spinning solution was extruded through a single hole -560 μm - spinneret at 183°C through a 3 cm jet gap into cold water and wound up at 270 m/min at a spinning stretch of 22.5. The extracted gel filaments had a linear density of 32 decitex. After hot drawing the fibre had a modulus of 90 g/dtex.

EXAMPLE 3

42 grams of polyethylene terephthalate of intrinsic viscosity of 0.96 (measured in dichloroacetic acid at 25°C) were dissolved in 78 grams of phenyl ether/biphenyl (73.5/26.5) at 240°C to give a 35% by weight polymer solution. The solution was spun at 190°C through a 560 μm single hole spinneret through a 3 cm jet gap into cold water and wound up at 270 m/min.

## Claims

1. A process for producing a filament or film of polyethylene terephthalate comprising forming a solution of polyethylene therephthalate, extruding the solution through a spinneret or a slot die, through air and into a cooling bath to form a gel filament or film, optionally removing residual solvent from the filament or film and drawing the filament or film to improve the modulus thereof characterised in that the solution of polyethylene terephthalate is formed in phenyl ether or a mixture of phenyl ether and biphenyl.

2. A process as claimed in Claim 1 further characterised in that the solution of polyethylene terephthalate is formed in a solvent having the composition of between 0 and 40% by weight of biphenyl and between 100 to 60% by weight of phenyl ether.

# Fig.1(a).

# Fig.1(b).

Fig .2.

EP 0 336 556 A2